# EUROPEAN PATENT SPECIFICATION

(11) **EP 1 108 566 B1**
(45) Date of publication and mention of the grant of the patent: **01.06.2005**
(21) Application number: 00310726.5
(22) Date of filing: 04.12.2000
(51) Int. Cl.: B60C 11/12, B60C 1/00, B60C 11/11

(54) **Pneumatic tire**
Luftreifen
Bandage pneumatique

(30) Priority: 02.12.1999 JP 34314999
(43) Date of publication of application: 20.06.2001
(73) Proprietor: BRIDGESTONE CORPORATION, Tokyo 104-0031 (JP)
(72) Inventor: Nakamura, Eiji, Tokyo 104-0031 (JP)
(74) Representative: Whalley, Kevin

(56) References cited:
- EP-A- 0 826 522
- EP-A- 0 885 925
- EP-A- 0 890 457
- EP-A- 0 896 981
- EP-A- 0 952 011
- US-A- 5 591 279

## Description

The present invention relates to a pneumatic tire, and more particularly to improvement of a pneumatic tire having excellent running performance and controlling stability on snowy and icy road surfaces, and wet and dry road surfaces.

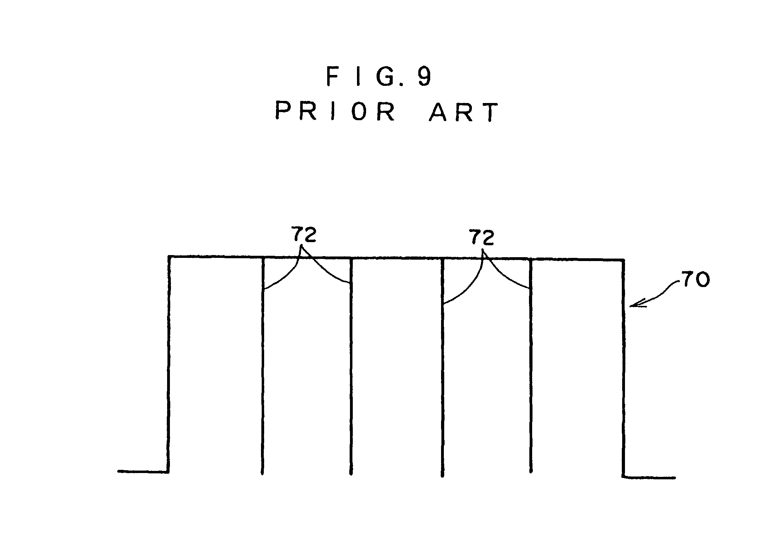

The use of spike tires was prohibited in order to eliminate dust pollution caused by spikes or studs protruding from tread surfaces of tire tread portions. Since this prohibition took effect, various attempts have been made in the hope of developing a tire that can retain excellent running performance on snowy and icy road surfaces even without the provision of spikes. These tires are generically called studless tires and generally have the following features in common. The tread of a studless tire is divided into a plurality of block-shaped land portions. As illustrated in Fig. 9 of the accompanying drawings, a plurality of vertical lateral sipes 72 extending straight in a depth direction is provided at each divided block-shaped land portion 70. The tread land portions are formed in blocks to improve the grip performance of the tire on snowy road surfaces. The block-shaped land portions are finely separated from one another by the lateral sipes to improve the coefficient of friction (hereinafter, coefficient of friction is occasionally indicated by µ) on ice due to a plurality of block corner parts formed by the fine division (edge effect).

In order to achieve a higher coefficient of friction on ice with such conventional technology, it has been necessary to increase the number of sipes. However, when the number of sipes is increased, contact performance of the tire deteriorates because the rigidity of block-shaped land portions decreases, and the resultant effect is not one to be desired. Moreover, irregular wear (heel and toe) is generated due to the deterioration of contact performance.

With studless tires, the rubber composition that is used in the tread is important. Conventionally, rubber which is relatively soft even at low temperatures (i.e., a rubber composition in which butadiene rubber and the like have been compounded in a large amount, or a foamed rubber composition and the like in which a large amount of oil has been compounded) has been used in order to raise performance on snowy and icy road surfaces. However, when performance on snowy and icy road surfaces is raised in the manner described above, the rigidity of block-shaped land portions with respect to general road surfaces decreases and performance on wet and dry road surfaces is greatly diminished. Consequently, it has not been possible to achieve a primarily essential level of µ.

Attention is also drawn to EP-0890457A, which discloses the pre-charactering part of claim 1; and also to EP-0896981A and EP-0885925A.

The present invention has been devised in view of the problems described above. The present invention provides a pneumatic tire which can suppress deterioration in contact performance whenever the number of sipes is increased and thus improve wet grip performance, braking performance on ice, driving performance and irregular wear resistance, and which can further enable a balance in excellent running performance and controlling stability on snowy and icy road surfaces and also wet and dry road surfaces.
The problems described above are overcome by the following tire.

A tire of the present invention is a pneumatic tire which comprises a tread having a plurality of block-shaped land portions separated from one another by a plurality of main grooves extending in a circumferential direction and a plurality of lug grooves intersecting the main grooves. Each block-shaped land portion has a plurality of lateral sipes. Each of the sipes are formed of: a first linear portion extending substantially vertically from a block-shaped land portion surface, a second linear portion extending substantially vertically but being separated from the block-shaped land portion surface, and a slanted portion connecting the first linear portion with the second linear portion and slanting toward a wall of the block-shaped land portion. The slanted portion of the sipes have a center position at a location 10% to 60% with respect to total vertical sipe depth. At least the block-shaped land portion is formed of a rubber composition comprising 100 parts by weight of rubber component which contains at least 15% by weight of butadiene rubber, and 30 parts by weight to 100 parts by weight of filler comprising a carbon black and a silica wherein the amount of the silica is from more than 0% by weight to not more than 10% by weight of the filler; and the rubber composition has a hardness, measured by JIS K6253-1993, of 60 or less.

In the present invention, the following pneumatic tire is also preferable. The tire has aforementioned sipes and following block-shaped land portions. At least the block-shaped land portion is formed of a rubber composition, which comprises silica and carbon black in a combined amount of 30 to 100 parts by weight per 100 parts by weight of a rubber component containing 15 parts by weight or more of butadiene rubber, silica in an amount of more than 0 to 90% by weight per the total amount of silica and carbon black, and at least one coupling agent in an amount of 3 to 20% by weight per an amount of the silica. The rubber composition has a hardness of 60 or less.

The invention will be further described with reference to the accompanying drawings, wherein:
Fig. 1 is a cross-sectional view, illustrating a block-shaped land portion of a pneumatic tire of a first embodiment of the present invention;
Fig. 2 is a plan view of a tread of the pneumatic tire of a preferred embodiment of the present invention.
Fig. 3 is a cross-sectional view of a block-shaped land portion of a pneumatic tire of a second embodiment of the present invention;
Fig. 4 is a graph showing a relationship between average variations and bending positions of a pneumatic tire having a sipe structure pertaining to the present invention.
Fig. 5 is a cross-sectional view of a block-shaped land portion of a pneumatic tire of a third embodiment of the present invention.
Fig. 6 is a perspective view of the block-shaped land portion of the pneumatic tire of the third embodiment of the present invention;
Fig. 7 is a cross-sectional view of a block-shaped land portion of a pneumatic tire of a fourth embodiment of the present invention;
Fig. 8 is a cross-sectional view of a block-shaped land portion of a pneumatic tire of a fifth embodiment of the present invention; and
Fig. 9 is a cross-sectional view of a block-shaped land portion of a conventional pneumatic tire.

In a pneumatic tire of the present invention, slanted portions of sipes are set at a relatively shallow location. such that a center position of the slanted portions corresponds to a location having a depth of 10% to 60% with respect to a sipe depth. For this reason, flexural rigidity of block-shaped land portions can be maintained and deformation of land portions is suppressed, even when the number of sipes is increased. Accordingly, the degree to which block-shaped land portions are deformed at the time the number of sipes is increased is lessened, and deterioration in contact performance is suppressed. Therefore, it becomes possible to improve the tire's wet grip performance, braking on ice, driving performance and resistance to irregular wear. Moreover, contact performance of the block-shaped land portions can be improved because at least the block-shaped land portions are formed of the specific rubber composition described above. As a result, it becomes possible to enable a balance in excellent running performance and controlling stability on all road surfaces, such as snowy and icy road surfaces and also wet and dry road surfaces.

The pneumatic tire of the present invention comprises a tread wherein block-shaped land portions are separated from one another by a plurality of main grooves extending in a circumferential direction and a plurality of lug grooves that intersect the main grooves. The block-shaped land portions each respectively have a plurality of lateral sipes. The sipes are formed of first linear portions which extend substantially vertically with respect to tread surfaces of the block-shaped land portions and make contact with the same tread surfaces, second linear portions which extend substantially vertically with respect to the tread surfaces of the block-shaped land portions but are separate from the same tread surfaces (i.e., the second linear portions do not make contact with the tread surfaces of the block-shaped land portions), and slanted portions which link the first linear portions with the second linear portions and slant toward walls of the block-shaped land portions. That is, the first linear portion and the second linear portion are adjacent to one another, and the slanted portion connects the first linear portion, which is situated nearer the center of a block-shaped land portion, with the second linear portion, which is situated outer from the first linear portion.

The position of the slanted portions is set at 10% to 60% with respect to the sipe depth. The block-shaped land portions are formed of a rubber composition comprising a rubber component containing butadiene rubber, silica, carbon black and preferably also a coupling agent. The rubber composition may comprise silica and carbon black in a combined amount of 30 to 100 parts by weight per 100 parts by weight of a rubber component having 15 parts by weight or more of butadiene rubber, silica in an amount of not more than 90% by weight per the total amount of silica and carbon black, and a coupling agent in an amount of 3 to 20% by weight per the silica. The rubber composition has a hardness of 60 or less.

The rubber component contains butadiene rubber in an amount of 15% by weight or more, preferably 15 to 80% by weight, and more preferably 20 to 70% by weight. When the amount of butadiene rubber is less than 15% by weight, necessary elastic modulus at low temperatures cannot be obtained and performance on snow and ice diminishes.

The filler comprises at least one type of carbon black. The type of the carbon black is not particularly limited and can be selected from those conventionally used in the tire industry, such as SAF, ISAF, HAF, and SRF. Preferably the carbon black is selected from SAF, ISAF and HAF.

The amount of filler is 30 to 100 parts by weight preferably 40 to 70 parts by weight, and more preferably 45 to 65 parts by weight of the rubber component. When the compounding amount of filler is less than 30 parts by weight, reinforcing ability of block-shaped land portions decreases resulting in remarkable decrease in wear resistance. On the other hand, when the compounding amount exceeds 100 parts by weight, elastic modulus of the vulcanized rubber composition increases remarkably and performance on snow and ice diminishes.

The filler further comprises at least one type of silica. Namely, the filler comprises a carbon black and a silica. Further, the amount of the silica is from more than 0% by weight to not more than 90% by weight of the filler. That is, the amount of silica is more than 0% by weight to not more than90% by weight, preferably 20% by weight to 90% by weight, and more preferably 40% by weight to 90% by weight per the total amount of filler. In the present invention, specific configurations of the block-shaped land portions of the pneumatic tire effectively suppress collapse occurring in conventional sipe structures. However, by further compounding silica to the block-shaped land portions, strain can be concentrated on surfaces of the block-shaped land portions and a better braking performance on wet road surfaces can be realized. When the compounding amount of silica exceeds 90% by weight, extrusion workability of rubber composition tends to deteriorate.

There are no particular limitations on the types of silica in the rubber composition, and conventionally known silica can be selected for the present invention.

The rubber composition may also contain at least one coupling agent in an amount of 3% to 20% by weight of silica. That is, the rubber composition may contain at least one coupling agent in an amount of 3% to 20% by weight, preferably 5% to 15% by weight, and more preferably 6% to 12% by weight per an amount of silica. When the compounding amount is less than 3% by weight, reinforcing ability of the vulcanized rubber composition tends to decrease resulting in decrease in wear resistance. On the other hand, when the compounding amount exceeds 20% by weight, performance on snow and ice may decrease due to the increase in elastic modulus, and extrusion workability (facility of manufacturing) of the rubber composition tends to deteriorate.

There are no particular limitations on the type of coupling agent in the rubber composition described above, and it can be selected from the conventionally known agents.

The rubber composition has a hardness of 60 or less, but it is preferable that the hardness is 58 or less and more preferably 56 or less. Although the rubber composition has such a low hardness, collapse of block-shaped land portions, such as collapse caused by conventional sipe structures, can be suppressed, and a higher braking performance on icy, snowy, wet and dry road surfaces can be realized by incorporating a sipe having the structure of the present invention. By hardness is meant a value measured in accordance with JIS K6253-1993.

The rubber composition may include closed cells having a foam ratio of 5% to 50%. That is, the rubber composition, when vulcanized, may be a foamed rubber having a cell content of 5% to 50% and preferably 10% to 40% from the standpoint of removing water in order to improve performance on snow and ice. When the cell content is less than 5%, the softening effect produced by foaming may not be sufficient. When the cell content exceeds 50%, resistance to wear may not be sufficient.

The cell content Vs is expressed as Vs={(rho₀/rho₁)-1}x100(%), wherein rho, is a density of the foamed rubber (g/cm³), and rho₀ is a density of a solid-phase portion of the foamed rubber (g/cm³). In order to form cells in the vulcanized rubber composition, a blowing agent and a blowing auxiliary are included in the rubber composition.

An example of a blowing agent includes dinitrosopentamethylenetetramine (DPT), azodicarbonamide (ADCA), dinitrosopentastyrenetetramine, benzenesulfonylhidrazide dielectric material, oxybisbenzenesulfonylhidrazide (OBSH), or the like. Above all, azodicarbonamide (ADCA) is preferable when manufacturability is taken into consideration.

For the blowing auxiliary, an auxiliary which is used for manufacturing an ordinary blowing product such as carbamide, zinc stearate, zinc benzenesulfinic acid, zinc oxide, or the like is preferably used. Other blowing agent and blowing auxiliary may be used.

From the standpoint of improving performance on wet and dry road surfaces, the rubber composition may include a polybutadiene in an amount of 6 parts by weight or greater, preferably 6 to 50 parts by weight and more preferably 6 to 25 parts by weight per 100 parts by weight of the rubber component. The polybutadiene has a polystyrene converted weight average molecular weight (Mw) of 2000 to 80,000, preferably 5000 to 80,000and more preferably 10,000 to 80,000. When the Mw is less than 2000, the effect of improving performance on wet road surfaces may be insufficient. When the Mw exceeds 80,000, difficulties in producing may be encountered industrially. Further, when the compounding amount is less than 6 parts by weight, the effect of improving performance on wet road surfaces may be insufficient.

The rubber composition may comprise at least one kind of short fiber having a length of 10mm or less, preferably 1mm to 7mm, and more preferably 1.5mm to 5.0mm, from the standpoint of promoting drainage performance and improving performance on snowy, icy and wet road surfaces. When the length of the short fiber exceeds 10mm, there may be a pronounced deterioration in extrusion workability at the time the rubber composition is produced.

A diameter of the short fiber in the rubber composition may be 0.01 to 0. lmm. When the diameter is less than 0.01mm, improvement of performance on snowy, icy and wet road surfaces resulting from the effect of sufficient drainage performance may not be obtained. When the diameter exceeds 0. 1mm, there may be a pronounced deterioration in extrusion workability at the time the rubber composition is produced.

The short fiber in the rubber composition may be contained in an amount of 0.5 to 15 parts by weight, preferably 1.2 to 13.0 parts by weight, and more preferably 1.5 to 10.0 parts by weight per 100 parts by weight of the rubber component. When the compounding amount is less than 0.5 parts by weight, improvement of performance on snowy, icy and wet road surfaces resulting from the effect of sufficient drainage performance may not be obtained. When the compounding amount exceeds 15 parts by weight, there may be a pronounced deterioration in extrusion workability at the time the rubber composition is produced.

As the short fiber suitable for the present invention, short fibers of polyethylene resin, polyester resin, polypropylene (PP) resin, wool and the like may be used. Among them, short fibers of polyethylene resin and polypropylene (PP) resin are preferable.

When the rubber composition contains short fibers and closed cells (bubble), polyethylene short fiber, and polypropylene (PP) short fibers are particularly preferable from the standpoint of forming a surface configuration of the block-shaped land portion that has a high drainage effect.

As described in European patent publication EP-826522A1, these resins are melted by heating during vulcanization, and as the vulcanization proceeds, the viscosity thereof becomes lower than that of the rubber matrix. The gases generated by the blowing agent or that contained in the rubber move toward and concentrate at the inner side of the melted resin, which has the lowest viscosity within the tread rubber. As a result, an elongated closed cell reinforced by a protective resin layer can be formed.

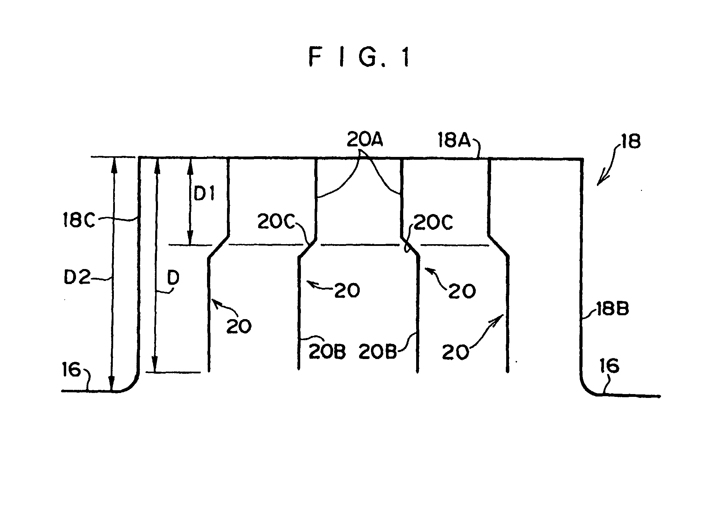

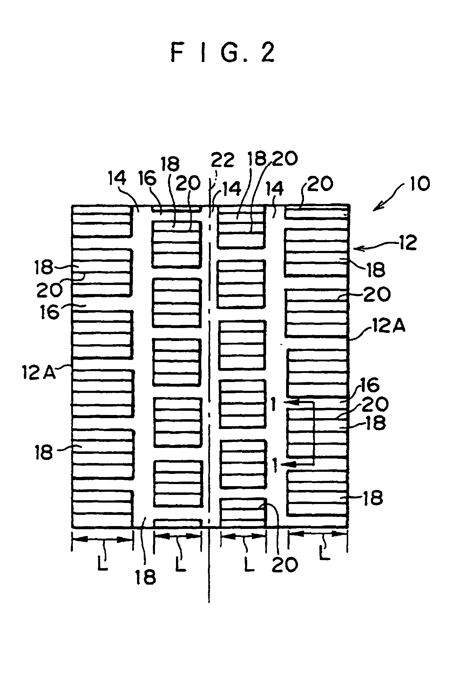

A first embodiment of the pneumatic tire of the present invention will hereinafter be described with reference to Figs. 1 and 2. In the Figures, hatching has been omitted.

As illustrated in Fig. 1, a block-shaped land portion of the first embodiment of the present invention has a specific configuration.

As illustrated in Fig. 2, which illustrates a portion of a tread of the pneumatic tire, a plurality of main grooves 14 extending in a circumferential direction and a plurality of lug grooves 16 which intersect the main grooves 14 are formed in a tread 12 of a pneumatic, studless tire 10. Block-shaped land portions 18 are divided by the main grooves 14 and the lug grooves 16.

A plurality of lateral sipes 20 may be formed in each respective block-shaped land portion 18. For example, there are three sipes in Fig.2, and therefore, if the block-shaped land portion 18 is cut along line 1-1 of Fig. 2, a cross-sectional view of a block-shaped land portion has three sipes. Further, the block-shaped land portion of the present invention can have either an even or odd number of sipes. However, even number sipes are more preferable. Furthermore, conventional other sipes may be contained in the block-shaped land portion of the present invention. The sipes may be formed such that they are located in symmetry.

As shown in Fig. 1, the sipes of each block-shaped land portion 18 are formed of first linear portions 20A, second linear portions 20B and slanted portions 20C. The first linear portions 20A extend substantially vertically with respect to a tread surface 18A of the block-shaped land portion 18 and make contact with the same tread surface 18A. The second linear portions 20B extend substantially vertically with respect to the tread surface 18A of the block-shaped land portion 18 and are separate from the same tread surface 18A. The slanted portions 20C connect adjacent ends of the first linear portions 20A and the second linear portions 20B. Each slanted portion 20C slants toward a wall of two respective walls 18B and 18C, of the lug grooves 16 of the block-shaped land portions 18, nearer to each respective slanted portion 20C.

Namely, in sipes 20 disposed between a center of the block-shaped land portion 18 and the wall 18B, the slanted portions 20C bend toward the wall 18B such that the slanted portions 20C face the base portion of the block-shaped land portion 18 from the tread surface 18A. Further, in sipes 20 disposed between the center of the block-shaped land portion 18 and the wall 18C, the slanted portions 20C bend toward the wall 18C such that the slanted portions 20C face the base portion of the block-shaped land portion 18 from the tread surface 18A. In other words, the first linear portions 20A and the second linear portions 20B are connected by the slanted portions 20C, and a distance between second linear portion 20B and a wall nearer thereto is shorter than a distance between the first linear portion 20A and the wall. Further, each angle obtained from the first linear portions 20A and the second linear portions, and slanted portions 20C and the second linear portions, is an obtuse angle. Furthermore, the block-shaped land portions have a wall facing toward the lug grooves, with said walls having a straight configuration.

Further, a center position D 1 of the inclined portions 20C (it may be referred to as stepped position hereinafter) is established in each sipe 20 at a location having a depth of 10% to 60% of a sipe depth D. In the present invention, the sipe 20 and a block-shaped land portion 18 may have different depths or depths that are substantially the same. However, depths that are substantially the same are more preferable.

Though not illustrated, known tire structures can be suitably adapted to the studless tire of the present invention. Such a known tire structure comprises left and right sidewalls and a crown portion between the left and right sidewalls, which is a continuous toroidal shape and at the crown portion, a tread is mounted. Further, the tire is reinforced by a carcass and an non-extendible belt layer. The carcass is formed of at least one fiber cord radial ply, which is typically reinforced by nylon and/or polyester fiber cord, or a steel cord reinforced radial ply, which stretch from one sidewall through the crown to the other sidewall. The belt layer has one or a plurality of steel cord layers disposed between the carcass and the tread.

In the present embodiment illustrated in Fig. 2, a circumferential direction main groove 14 is disposed on an equatorial plane 22 and further grooves 14 are disposed at either side thereof, and the circumferential main grooves 14 are substantially parallel with one another. The lug grooves 16 intersecting the main grooves 14 are disposed at predetermined intervals in the circumferential direction. Accordingly, block-shaped land portions 18 between main grooves 14 and block-shaped land portions 18 between main grooves 14 and tread ends 12A are thus divided. An axial direction width L of block-shaped land portions 18 which face the tread end 12A (so-called shoulder blocks) is wider than an axial direction width L of block-shaped land portions 18 disposed closer to the equatorial plane 22. Namely, a width of outer block-shaped land portions disposed at an end of the tread is greater than a width of inner block-shaped land portions disposed at an inner side of the outer block-shaped land portions.

Although straight configurations of the main grooves 14 and the lug grooves 16 are used in Fig. 2, well known groove configurations which extend in the circumferential direction and swing left and right at a predetermined amplitude in a zigzag, crank or other manner may also be used as the configuration of the main grooves 14. Similarly, the lug grooves 16 may also be of a crank, zigzag, inverse check (i.e., having a " 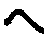 " configuration) or other configuration.

In the present embodiment, three lateral sipes 20 are provided in Fig. 2 at substantially equal intervals at each of the rectangular block-shaped land portions 18 in plan view but the interval may be different from one another. Preferably symmetry may be formed in each block-shaped land portion 18 by sipes at substantially equal intervals. In examples illustrated in other Figures, four lateral sipes 20 are provided at substantially equal intervals at the center portion of the sipes. Namely, the block-shaped land portion of the present invention may have at least three or at least four sipes, which are aligned in a transverse direction and provided at a substantially even spacing.

In the first embodiment, the center position (stepped position) D1 of the slanted portions 20C is set at a relatively shallow location having a depth 10% to 60% of the sipe depth D of the sipes 20. As a result, the degree to which deformation of the block-shaped land portions 18 occur when the number of sipes 20 is increased can be reduced, thereby suppressing deterioration of contact performance.

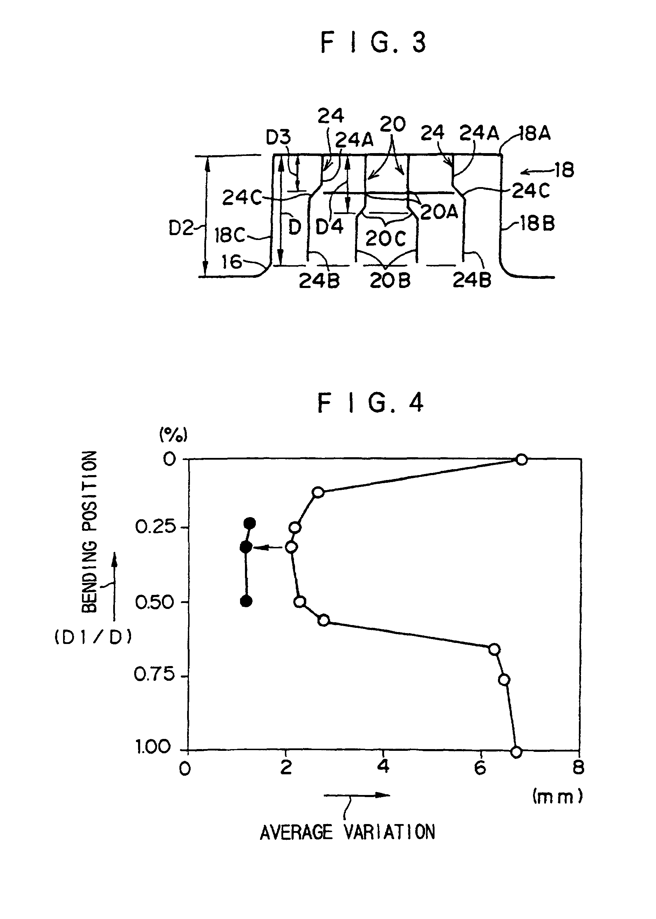

As shown in Fig. 4, in the sipe configuration of the present embodiment, flexural rigidity of the block-shaped land portions 18 is maintained and deformation is suppressed as compared with a sipe having a configuration in which the depth of the center position (stepped position) of the slanted portions is not set at a location 10% to 60% of the sipe depth D. Consequently, wet grip performance, braking on ice, driving performance and irregular wear resistance can be improved. The details of Fig. 4 are discussed below in Examples 7 and 8.

Further, at the surface of the block-shaped land portion 18, for example, at the surface in plan view (Fig. 2), the line of sipes 20 (lateral or horizontal line) may have a zigzag configuration in addition to a straight configuration. Moreover, a terminating lateral sipe, which does not completely transverse the block-shaped land portion 18, but has at least one end, which terminates within the block-shaped land portion 18, may be disposed. For example, the sipe may be disposed in a staggered configuration. It is also possible to suitably use a combination of transverse sipes and terminating sipes. The sipes in Fig. 2 are transverse lateral sipes which completely transverse the block-shaped land portion 18.

A second embodiment of the pneumatic tire of the present invention will next be described with reference to Fig. 3.

Members the same as those already mentioned in connection with the first embodiment are designated by the same reference numerals, and description thereof is omitted.

As illustrated in Fig. 3, in the present embodiment, at least four sipes consisting of a pair of inner sipes 20 and a pair of outer sipes 24 are formed in a block-shaped land portion 18. A center position D3 of slanted portions 24C of the outer sipes 24 is set at a shallower depth than a center position D4 of slanted portions 20C of the inner sipes 20. That is, in the plurality of lateral sipes, the center position of the slanted portions of sipes nearest lug grooves, is at a location shallower than the center position of the slanted portions of at least some sipes, that are further from the lug grooves, in the present embodiment.

Accordingly, in the present embodiment, because the center position D3 at the sipes 24 is set at a shallower depth than the center position D4 at the sipes 20, flexural rigidity at the outer sides of the block-shaped land portion 18 is maintained and deformation is further suppressed, even when the number of sipes is increased. As a result, the degree to which deformation of the block-shaped land portions 18 occur when the number of sipes is increased can be reduced, thereby suppressing deterioration of contact performance. For this reason, wet grip performance of the tire, braking performance on ice, driving performance and irregular wear resistance can be further improved.

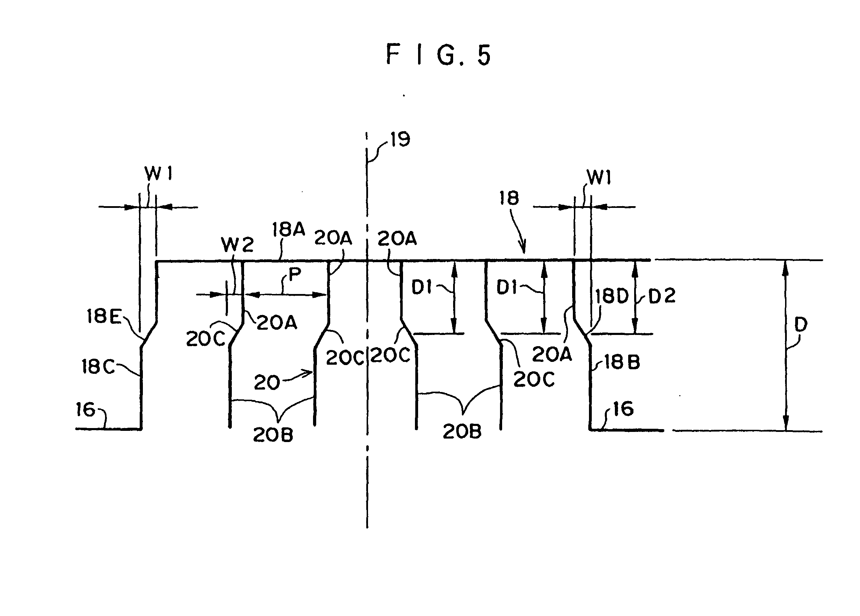

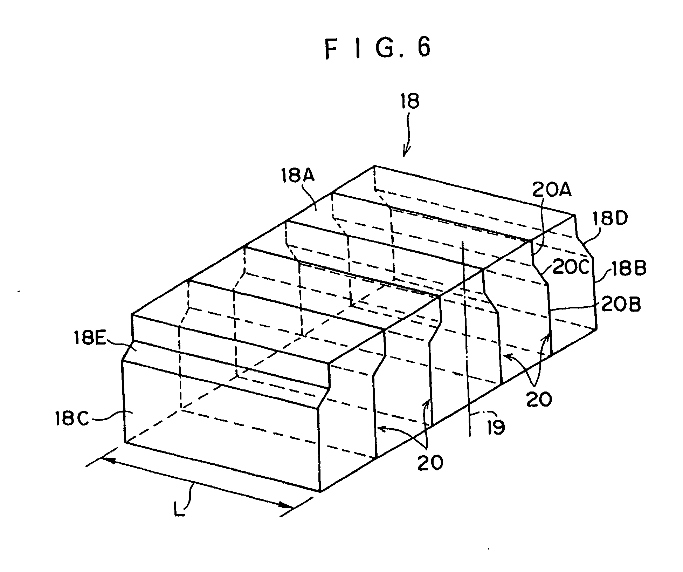

A third embodiment of the pneumatic tire of the present invention will next be described with reference to Figs. 5 and 6.

Members the same as those already mentioned in connection with the first embodiment are designated by the same reference numerals, and description thereof is omitted.

As illustrated in Fig. 6, in the third embodiment of the present invention, sipes 20 of each block-shaped land portion 18 are formed of first linear portions 20A, second linear portions 20B and slanted portions 20C. The first linear portions 20A extend substantially vertically with respect to a tread surface 18A of the block-shaped land portion 18 and make contact with the same tread surface 18A. The second linear portions 20B extend substantially vertically with respect to the tread surface 18A of the block-shaped land portion 18, are separate from the same tread surface 18A, and disposed at a side removed from a center line 19 of the block-shaped land portion 18 with respect to the first linear portions 20A. The slanted portions 20C connect adjacent ends of the first linear portions 20A and the second linear portions 20B. As the slanted portions 20C move toward the second linear portions 20B from the first linear portions 20A, the slanted portions 20C move toward lug grooves 16 (i.e., in a direction toward the bottom of the figure).

Walls 18B and 18C of the block-shaped land portion 18 facing the lug grooves 16 are formed in a stepped configuration. Hence, the base of the block-shaped land portion 18 is wider than the surface of the block-shaped land portion 18.

As illustrated in Fig. 5, in the present embodiment, a center position D1 of the slanted portions 20C of the sipes 20 and a center position D2 of inclined portions 18D and 18E of walls 18B and 18C are of substantially the same height. That is, the center position of the slanted portions of the sipes and the center position of slanted portions of the walls are at substantially the same height. A differential W1 between the walls 18B and 18C of the block-shaped land portion 18 is set at 4mm or less. Namely, the wall has a top edge and bottom edge with a horizontal differential off set of 4mm or less between the top and end portion.

Further, the center position D2 of the slanted portions 18D and 18E of the walls 18B and 18C of the block-shaped land portion 18 and the center position D1 of slanted portions 20C of the sipes 20 are respectively set at 10% to 60% of a depth D (sipe depth) of the block-shaped land portion 18. A differential W2 of each respective sipe 20 (a distance between the first linear portions 20A and the second linear portions 20B) is set at 1/2 or less of an adjacent sipe interval P. That is, a horizontal off set differential between the first linear portions and the second linear portions of a sipe is 1/2 or less than that of an interval formed between the sipe and an adjacent sipe.

Accordingly, in the present embodiment, because a stepped portion is provided in the walls 18B and 18C of the block-shaped land portion 18 and a stepped portion is also provided in the sipes 20, the degree to which deformation of the block-shaped land portion 18 occurs when the number of sipes is increased can be reduced, thereby suppressing deterioration of contact performance.

Because the center position D 1 of the slanted portions 20C of the sipes 20 is also set at a relatively shallow location such that the location is 10% to 60% of the sipe depth D in the present embodiment, the degree to which deformation of the block-shaped land portion 18 occurs when the number of sipes 20 is increased can be reduced, thereby suppressing deterioration of contact performance.

Further, in the present embodiment, the center position D2 of the slanted portions 18D and 18E is set at a location relatively near to the tread surface and shallow, such that the location is 10% to 60% of a height D of the block-shaped land portion 18. That is, the walls have slanted portions with a center position at a location 10% to 60% of the height of the block-shaped land portions. Therefore, flexural rigidity of the block-shaped land portion 18 is maintained and deformation is suppressed even when the number of sipes is increased.

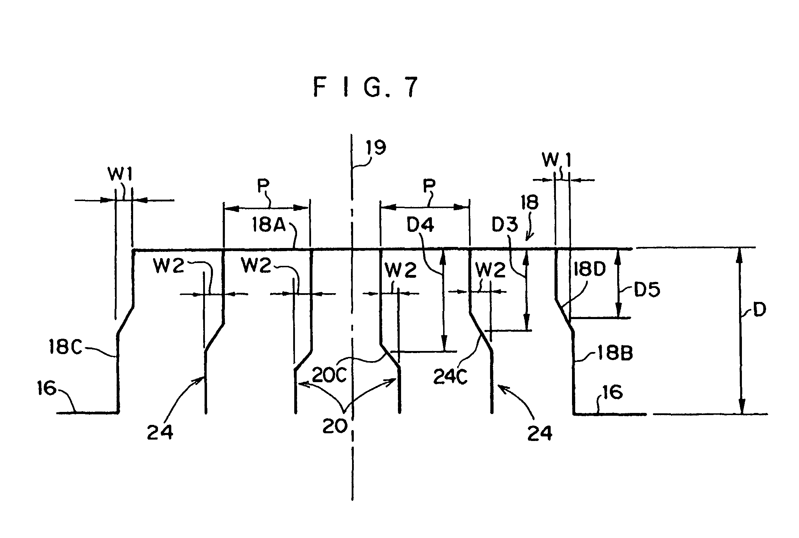

A fourth embodiment of the pneumatic tire of the present invention will next be described with reference to Fig. 7.

Members the same as those already mentioned in connection with the third embodiment are designated by the same reference numerals, and description thereof is omitted.

As illustrated in Fig. 7, in the fourth embodiment of the present invention, at least four lateral sipes consisting of a pair of inner sipes 20 and a pair of outer sipes 24 are formed in a block-shaped land portion 18 such that a center line 19 of the block-shaped land portion 18 is interposed between the pair of inner sipes 20 and outer sipes 24. A center position D3 of slanted portions 24C of the outer sipes 24 is set at a shallower depth than a center position D4 of slanted portions 20C of the inner sipes 20. That is, in the plurality of lateral sipes, the center position of the slanted portions of sipes nearest lug grooves is at a location shallower than the center position of the slanted portions of at least some sipes that are further from the lug grooves.

Moreover, a center position (stepped position) D5 of slanted portions 18D and 18E of walls 18B and 18C of the block-shaped land portion 18 is set at a shallower depth than the center position (stepped position) D3 of the slanted portions 24C of the outer sipes 24.

Accordingly, the center position D3 of the slanted portions 24C of the outer sipes 24 is set at a shallower depth than the center position D4 of the slanted portions 20C of the inner sipes 20, and the center position D5 of the slanted portions 18D and 18E of the walls 18B and 18C of the block-shaped land portion 18 is set at a shallower depth than the center position D3 of the slanted portions 24C of the outer sipes 24. That is, the block-shaped land portions have walls with slanted portions, the slanted portions of the walls having a center position that is at a location shallower than the center position of the slanted portions of sipes nearest lug grooves. Therefore, flexural rigidity at the outer sides of the block-shaped land portion 18 is maintained and deformation is further suppressed. As a result, the degree to which deformation of the block-shaped land portion 18 occurs when the number of sipes 20 is increased can be reduced, thereby suppressing deterioration of contact performance. Consequently, wet grip performance, braking on ice, driving performance and irregular wear resistance can further be improved.

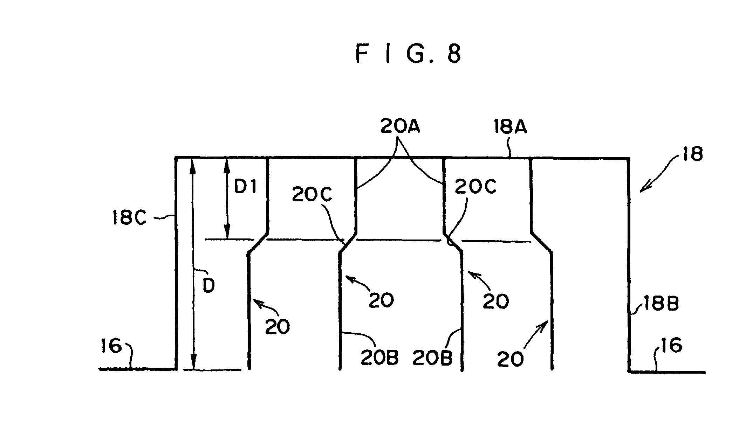

A fifth embodiment of the pneumatic tire of the present invention will next be described with reference to Fig. 8.

Members the same as those already mentioned in connection with the third embodiment are designated by the same reference numerals, and description thereof is omitted.

As illustrated in Fig. 8, in the present embodiment, walls 18B and 18C of a block-shaped land portion 18 are formed in straight lines without stepped portions.

Accordingly, in the present embodiment, because a center position D 1 of slanted portions 20C in sipes 20 is set at a relatively shallow location corresponding to 10% to 60% of a height (i.e., sipe depth) D of the block-shaped land portion 18, the degree to which deformation of the block-shaped land portion 18 occurs when the number of sipes 20 is increased can be reduced, thereby suppressing deterioration of contact performance.

Fig. 9 illustrates a conventional block-shaped land portion. Effects resulting from the working of the present invention cannot be obtained with such a conventional block-shaped land portion.

In the present invention, a preferable tire of the present invention is a tire wherein each of slanted portions connects only the first linear portion to the second linear portion such that each of the sipes comprise only the first and second linear portions joined together by the slanted portion. However, the tire of the present invention may contain a conventional sipe as shown in Fig. 9.

Further, the tire of the present invention can be filled with or can contain any gas such as air, nitrogen, or the like, or any combination of gases.

The present invention will hereinafter be further described by way of Examples, but the present invention is not limited to the same.

Methods of measurement are as follows.

### (a) Measurement of Hardness (Hd)

Hardness was measured in accordance with JIS K6253-1993 by using a type A durometer. The size of the sample was 20mm x 20 mm x 10 mm. When a rubber composition comprises short fibers, the measurement was taken in a direction vertical to the orientation of the fibers.

### (b) Test of Braking performance on Icy Road Surfaces

A test tire was mounted on a vehicle and braking distance at an initial speed of 20km/h on a test course having an icy road surface was measured. Braking performance was obtained as follows. Inverse numbers of respective braking distances are shown as an index with reference to the inverse number of a braking distance obtained in Comparative Example 1, which is set to 100. Larger numerical values indicate better braking performance.

### (c) Test of Braking Performance on Wet Road Surfaces

A test tire was mounted on a vehicle and braking distance at an initial speed of 70km/h on a test course having a wet road surface was measured. Braking performance was obtained as follows. Inverse numbers of respective braking distances are shown as an index with reference to the inverse number of a braking distance obtained in Comparative Example 1, which is set to 100. Larger numerical values indicate better braking performance.

### Preparation of Rubber Compositions

Rubber compositions A to I were produced according to compounding recipes shown in Table 1.

The test pieces for hardness measurement were prepared by using these rubber compositions.

**Table 1**

| Rubber composition | A | B | C | D | E | F | G | H | I |
|---|---|---|---|---|---|---|---|---|---|
| NR | 70 | 60 | 60 | 60 | 60 | 70 | 70 | 60 | 70 |
| BR01 | 30 | 40 | - | 40 | 20 | 10 | 10 | - | 30 |
| BR(a) | - | - | 66·7 | - | - | - | - | - | - |
| BR (b) | - | - | - | - | - | - | - | 66·7 | - |
| SBR | - | - | - | - | 27.5 | 27.5 | 27.5 | - | - |
| C/B | 40 | 25 | 45 | 25 | 20 | 20 | 20 | 20 | 20 |
| Silica | 20 | 30 | - | 30 | 40 | 40 | 40 | 40 | 40 |
| Coupling agent | 2.0 | 3.0 | - | 3.0 | 4.0 | 4.0 | 4.0 | 4.0 | 4.0 |
| Softening agent | 10 | 10 | 0 | 10 | 10 | 10 | 10 | 0 | 15 |
| Stearic acid | 2 | 2 | 2 | 2 | 2 | 2 | 2 | 2 | 2 |
| Anti-aging agent | 1 | 1 | 1 | 1 | 1 | 1 | 1 | 1 | 1 |
| Wax | 0.2 | 0.2 | 0.2 | 0.2 | 0.2 | 0.2 | 0.2 | 0.2 | 0.2 |
| Zinc oxide | 3.5 | 3.5 | 3.5 | 3.5 | 3.5 | 3.5 | 3.5 | 3.5 | 3.5 |
| DPG | 0.2 | 0.2 | 0.2 | 0.2 | 0.2 | 0.2 | 0.2 | 0.2 | 0.2 |
| DM | 0.4 | 0.4 | 0.4 | 0.4 | 0.4 | 0.4 | 0.4 | 0.4 | 0.4 |
| NS | 0.8 | 0.8 | 0.8 | 0.8 | 0.8 | 0.8 | 0.8 | 0.8 | 0.8 |
| S | 1.3 | 1.5 | 1.0 | 1.5 | 1.4 | 1.0 | 1.0 | 1.0 | 1.0 |
| Foaming agent | 4.0 | 5.0 | 4.5 | 5.0 | 4.5 | 3.0 | 10.0 | 5.5 | 4.5 |
| Polyethylene fiber | | | | | | | | | |
| Length (mm) | - | 2.0 | 2.0 | 3.0 | 2.0 | 3.0 | 3.0 | 2.0 | - |
| Diameter (mm) | - | 0.03 | 0.03 | 0.04 | 0.03 | 0.03 | 0.03 | 0.02 | - |
| Parts (PHR) | - | 2.0 | 2.0 | 3.0 | 2.0 | 16.0 | 16.0 | 3.0 | - |
| Foaming ratio (%) | 18 | 25 | 25 | 23 | 22 | 12 | 55 | 26 | 25 |
| Hd | 63 | 48 | 47 | 48 | 49 | 68 | 40 | 49 | 48 |

### Details of descriptions in the table are as follows.

- NR: Natural rubber
- BR01: (trade name) Cis-1,4-polybutadiene (manufactured by JSR Corporation.)
- BR (a): A blend of Polybutadiene B₁ having low molecular weight (Mw 50,000)/ Polybutadiene A having high molecular weight (Mw 1,000,000) [Compounding ratio B₁:A=40:60]
- BR (b): A blend of Polybutadiene B₂ having low molecular weight (Mw 10,000)/ Polybutadiene A having high molecular weight (Mw 1,000,000) [Compounding ratio B₂:A=40:60]
- SBR: Emulsion polymerized styrene butadiene rubber (#1712 (trade name) manufactured by JSR Corporation.)
- C/B (carbon black): Seast 7H (trade name) manufactured by Tokai Carbon Co., Ltd. N₂SA 126m²/g)
- Silica: Nipsil AQ (trade name) (manufactured by Nippon Silica Industrial Co., Ltd.)
- Coupling agent: Bis(3-triethoxysilylpropyl) tetrasulfide (Si69 (trade name) manufactured by Degussa AG)
- Softening agent: Aromatic oil
- Antioxidant: N-(1,3-dimethylbutyl)-N'-phenyl-phenylenediamine (Nocrac 6c (trade name) manufactured by OuchiShinko Chemical Industrial Co., Ltd.)
- DPG: 1,3-diphenylguanidine ( "Nocceler D" (trade name), manufactured by OuchiShinko Chemical Industrial Co., Ltd.)
- DM: Dibenzothiazyl sulfide ( "Nocceler DM-P" (trade name), manufactured by OuchiShinko Chemical Industrial Co., Ltd.)
- NS: N-tert-butyl-2-benzothiazolylsulfineamide ( "Nocceler NS-P" (trade name), manufactured by OuchiShinko Chemical Industrial Co., Ltd.)
- Foaming agent: Azodicarboneamide (ADCA)(manufactured by Otsuka Kagaku K.K.)

### Examples 1 to 6, and Comparative Examples 1 to 3

The tests of braking performance on icy road surfaces and braking performance on wet road surfaces were carried out with 205/65R15 size tires. The tires were provided with left/right symmetrically disposed sipes 20 having a sipe depth D and slanted portions 20C at center positions (stepped positions) of the sipes 20, as shown in Fig. 1. Further, the tires respectively comprised rubber compositions A to I, which form block-shaped land portions 18 of the tires. These tires are shown as Comparative Example 1, Examples 1 to 4, Comparative Examples 2 and 3, and Examples 5 and 6. In the 205/65R15 size tires described above, D1 is 5%, 10%, 30%, 60% or 70% of D, and with regard to block-shaped land portions 18, block length is 20mm, block width is 20mm, block height D2 is 10mm, sipe width is 0.4mm and sipe depth D is 7mm. The results are shown in Table 2. Example 2 is outside the scope of the invention because the rubber composition C does not contain silica.

**Table 2**

| | C.E.1 | Ex.1 | Ex.2 | Ex.3 | Ex.4 | C.E.2 | C.E.3 | Ex.5 | Ex.6 |
|---|---|---|---|---|---|---|---|---|---|
| Rubber composition of block land part | A | B | C | D | E | F | G | H | I |
| Braking performance on icy road surface | 100 | 111 | 110 | 109 | 101 | 85 | 109 | 111 | 108 |
| Braking performance on wet road surface | 100 | 103 | 105 | 106 | 102 | 110 | 80 | 107 | 102 |

| | | | | | | | | | |
|---|---|---|---|---|---|---|---|---|---|
| C.E.: Comparative Example, Ex: Example | | | | | | | | | |

A feeling test on a dry road was conducted with similar tires. It is found that tires of the present invention show a similar level of performance on a dry road as the tire of the comparative Example 1.

As illustrated by the results of the tests, when block-shaped land portions are formed of a specific rubber composition, flexural modulus of the block-shaped land portions can be improved significantly, and it becomes possible to achieve a balance in both excellent running performance and controlling stability on snowy and icy, wet and dry road surfaces.

### Example 7

In order to confirm effects resulting from the sipe structure of the present invention, a block sample to which the sipe structure of the present invention had been applied was subjected to a test (i.e., a sample was pushed horizontally with a pressure of 24.5Pa (2.5kgf/cm²) so that it slid at 20km/h).

Sipes 20 bent at an identical depth were disposed such as a form of Fig. 1. A center position D1 of slanted portions 20C was changed, and an average variation at that time of block-shaped land portions 18 was measured. The results are indicated by blank circles shown in Fig. 4.

As can be seen from the results, when the sipes 20 were bent at about 10% to 60% depth location of the sipe depth D, deformation (average variation) of the block-shaped land portions 18 was suppressed.

### Example 8

A center position D3 of inclined portions 24C of outer sipes 24 of block-shaped land portions 18 were set at a depth 20% shallower than a stepped position D4 of inner sipes 20 such as shown in Fig. 3, and D3 and D4 were changed. An average variation was measured. The results are indicated by solid black circles shown in Fig. 4.

As can be seen from the results, when the center position D3 of the slanted portions 24C of the outer sipes 24 were set at a depth 20% shallower than the depth D4 of the end position of the tread surface 18A of the slanted portions 20C of the inner sipes 20, deformation (average variation) of the block-shaped land portions 18 was further suppressed. According to the present invention, a pneumatic tire can be provided which can suppress deterioration in contact performance at the same time the number of sipes is increased and thus improve wet grip performance, braking on ice and irregular wear resistance, and which can further enable a balance in excellent running performance and controlling stability on snowy or icy road surfaces and also wet and dry road surfaces can be provided.

## Claims

1. A pneumatic tire (10), comprising a tread (12) have a plurality of block-shaped land portions (18) separated from one another by a plurality of main grooves (14) extending in the circumferential direction and a plurality of lug grooves (16) intersecting the main grooves, each block-shaped land portion having a plurality of lateral sipes (20), each of the sipes being formed of:
a first linear portion (20A) extending substantially vertically from the block-shaped land portion surface (18A), a second linear portion (20B) extending substantially vertically but being separated from the block-shaped land portion surface, and a slanted portion (20C) connecting the first linear portion with the second linear portion and slanting toward a wall (18B,18C) of the block-shaped land portion,
the slanted portion (20C) of the sipes (20) having a center position (D1) at a location 10% to 60% with respect to total vertical sipe depth (D), **characterized in that**
at least the block-shaped land portion (18) is formed of a rubber composition comprising 100 parts by weight of a rubber component which contains at least 15% by weight of butadiene rubber, and 30 parts by weight to 100 parts by weight of a filler which comprises a carbon black and a silica wherein the amount of the silica is from more than 0% by weight to not more than 90% by weight of the filler; and **in that** the rubber composition has a hardness, measured by JIS K6253-1993, of 60 or less.

2. A pneumatic tire as claimed in claim 1, **characterized in that** the rubber composition constituting the block-shaped land portion further comprises a coupling agent in an amount of 3% by weight to 20% by weight of the silica.

3. A pneumatic tire as claimed in claim 1 or 2, **characterized in that** the rubber composition constituting the block-shaped land portion further comprises a polybutadiene having a polystyrene converted molecular weight of 2,000 to 80,000 in an amount of 6 parts by weight or more per 100 parts by weight of the rubber component.

4. A pneumatic tire as claimed in any of claims 1 to 3, **characterized in that** the rubber composition further comprises a short fiber having a length of 10mm or less.

5. A pneumatic tire as claimed in claim 4, **characterized in that** the diameter of the short fiber is 0.01mm to 0.1mm

6. A pneumatic tire as claimed in claim 4 or 5, **characterized in that** the short fiber is a polyethylene short fiber.

7. A pneumatic tire as claimed in any of claims 4 to 6, **characterized in that** the amount of short fiber is comprised in an amount of 0.5 to 15 parts by weight per 100 parts by weight of the rubber component.

8. A pneumatic tire as claimed in any of claims 1 to 7, **characterized in that** the rubber composition includes closed cells having a foam ratio of 5% to 50%.

9. A pneumatic tire as claimed in any of claims 1 to 8, **characterized in that** the rubber component contains 15% to 80% by weight of butadiene rubber.

## Patentansprüche

1. Luftreifen (10), der umfaßt:
eine Lauffläche (12) mit mehreren blockförmigen Bodenteilen (18), die voneinander durch mehrere Hauptrillen (14), die sich in Umfangsrichtung erstrecken, und mehrere Distanzrillen (16), welche die Hauptrillen kreuzen, getrennt sind, wobei jeder blockförmige Bodenteil mehrere Querlamellen (20) aufweist, wobei jede der Lamellen gebildet ist aus:
einem ersten linearen Teil (20A), der sich im wesentlichen vertikal von der Oberfläche des blockförmigen Bodenteils (18A) erstreckt, einem zweiten linearen Teil (20B), der sich im wesentlichen vertikal erstreckt, jedoch getrennt ist von der Oberfläche des blockförmigen Bodenteils, und einem abgeschrägten Teil (20C), der den ersten linearen Teil mit dem zweiten linearen Teil verbindet und zu einer Wand (18B, 18C) des blockförmigen Bodenteils hin geneigt ist,
wobei der abgeschrägte Teil (20C) der Lamellen (20) einen Mittelpunkt (D1) an einer Stelle 10 % bis 60 % in Bezug auf die vertikale Lamellengesamttiefe (D) aufweist, **dadurch gekennzeichnet, daß**
zumindest der blockförmige Bodenteil (18) gebildet ist aus einer Gummizusammensetzung, umfassend 100 Gew.Teile einer Gummikomponente, die mindestens 15 Gew.% Butadiengummi enthält, und 30 Gew.Teile bis 100 Gew.Teile eines Füllstoffs, welcher einen Ruß und ein Silica enthält, wobei die Menge Silica mehr als 0 Gew.% bis nicht mehr als 90 Gew.% des Füllstoffs ist; und daß die Gummizusammensetzung eine Härte von 60 oder weniger, gemessen nach JIS K6253-1993, besitzt.

2. Luftreifen wie in Anspruch 1 beansprucht, **dadurch gekennzeichnet, daß** die Gummizusammensetzung, welche den blockförmigen Bodenteil bildet, ferner einen Haftverbesserer in einer Menge von 3 Gew.% bis 20 Gew.% des Silica enthält.

3. Luftreifen wie in Anspruch 1 oder 2 beansprucht, **dadurch gekennzeichnet, daß** die Gummizusammensetzung, welche den blockförmigen Bodenteil bildet, weiter ein Polybutadien mit einem Polystyrol-umgerechneten Molekulargewicht von 2.000 bis 80.000 in einer Menge von 6 Gew.Teilen oder mehr pro 100 Gew.Teile der Gummikomponente umfaßt.

4. Luftreifen wie in mindestens einem der Ansprüche 1 bis 3 beansprucht, **dadurch gekennzeichnet, daß** die Gummizusammensetzung weiter eine Kurzfaser mit einer Länge von 10 mm oder weniger enthält.

5. Luftreifen wie in Anspruch 4 beansprucht, **dadurch gekennzeichnet, daß** der Durchmesser der Kurzfaser 0,01 mm bis 0,1 mm ist.

6. Luftreifen wie in Anspruch 4 oder 5 beansprucht, **dadurch gekennzeichnet, daß** die Kurzfaser eine Polyethylen-Kurzfaser ist.

7. Luftreifen wie in mindestens einem der Ansprüche 4 bis 6 beansprucht, **dadurch gekennzeichnet, daß** der Kurzfaseranteil in einer Menge von 0,5 bis 15 Gew.Teilen pro 100 Gew.Teile der Gummikomponente enthalten ist.

8. Luftreifen wie in mindestens einem der Ansprüche 1 bis 7 beansprucht, **dadurch gekennzeichnet, daß** die Gummizusammensetzung geschlossene Zellen mit einem Schaumanteil von 5 % bis 50 % einschließt.

9. Luftreifen wie in mindestens einem der Ansprüche 1 bis 8 beansprucht, **dadurch gekennzeichnet, daß** die Gummikomponente 15 bis 80 Gew.% Butadiengummi enthält.

## Revendications

1. Bandage pneumatique (10), comprenant une bande de roulement (12) ayant une pluralité de parties d'appui en forme de pavés (18) séparées les unes des autres par une pluralité de rainures principales (14) s'étendant dans la direction circonférentielle et une pluralité de rainures de barrettes (16) coupant les rainures principales, chaque partie d'appui en forme de pavé ayant une pluralité de lamelles latérales (20), chacune des lamelles étant formée de :
une première partie linéaire (20A) s'étendant essentiellement verticalement depuis la surface de la partie d'appui en forme de pavé (18A), une seconde partie linéaire (20B) s'étendant essentiellement verticalement, mais étant séparée de la surface de la partie d'appui en forme de pavé, et une partie inclinée (20C) reliant la première partie linéaire à la seconde partie linéaire et s'inclinant vers une paroi (18B, 18C) de la partie d'appui en forme de pavé,
la partie inclinée (20C) des lamelles (20) présentant une position centrale (D1) située à un emplacement correspondant à 10 % à 60 % de la profondeur de lamelle verticale totale (D), **caractérisée en ce que**
au moins la partie d'appui en forme de pavé (18) étant formée d'une composition de caoutchouc comprenant 100 parties en poids d'un composant de caoutchouc contenant au moins 15 % en poids de caoutchouc butadiène, 30 parties en poids à 100 parties en poids de matière de remplissage comprenant un noir de carbone et de la silice dans lequel la quantité de silice se situe entre plus de 0 % en poids et 90 % en poids maximum de la matière de remplissage et la composition de caoutchouc ayant une dureté, mesurée par la norme JIS K6253-1993, de 60 voire moins.

2. Bandage pneumatique selon la revendication 1, **caractérisé en ce que** la composition de caoutchouc formant la partie d'appui en forme de pavé comprend en outre un agent d'accrochage selon une quantité de 3 % à 20 % en poids de silice.

3. Bandage pneumatique selon la revendication 1 ou 2, **caractérisé en ce que** la composition de caoutchouc formant la partie d'appui en forme de pavé comprend en outre du polybutadiène ayant une masse moléculaire en poids converti de polystyrène de 2000 à 80 000 selon une quantité de 6 parties en poids ou plus pour 100 parties en poids de composant de caoutchouc.

4. Bandage pneumatique selon une quelconque des revendications 1 à 3, **caractérisé en ce que** la composition de caoutchouc comprend en outre des fibres courtes ayant une longueur de 10 mm voire moins.

5. Bandage pneumatique selon la revendication 4, **caractérisé en ce que** le diamètre des fibres courtes est compris entre 0,01 mm et 0,1 mm.

6. Bandage pneumatique selon la revendication 4 ou 5, **caractérisé en ce que** les fibres courtes sont des fibres courtes en polyéthylène.

7. Bandage pneumatique selon les revendications 4 à 6, **caractérisé en ce que** la quantité de fibres courtes est comprise dans une quantité de 0,5 à 15 parties en poids pour 100 parties en poids de composant de caoutchouc.

8. Bandage pneumatique selon les revendications 1 à 7, **caractérisé en ce que** la composition de caoutchouc comprend des cellules fermées ayant un taux de mousse de 5 % à 50 %.

9. Bandage pneumatique selon la revendication 1 à 8, **caractérisé en ce que** le composant de caoutchouc contient 15 % à 80 % en poids de caoutchouc butadiène.
